# EUROPEAN PATENT APPLICATION

(11) **EP 4 589 802 A1**
(43) Date of publication of application: **23.07.2025**
(21) Application number: 23873032.9
(22) Date of filing: 25.09.2023
(51) Int. Cl.: H02J 7/00, B60L 58/10

(54) **BATTERY SYSTEM, BATTERY MANAGEMENT SYSTEM AND BATTERY MANAGEMENT METHOD**

(30) Priority: 26.09.2022 KR 20220121947
(71) Applicant: LG Energy Solution, Ltd., Seoul 07335 (KR)
(72) Inventor: SONG, Woo Seok, Daejeon 34122 (KR)
(74) Representative: Plasseraud IP
(86) International application number: PCT/KR2023/014682
(87) International publication number: WO 2024/071916

(57) **Abstract**

A battery system according to an embodiment disclosed herein includes a battery connected through a first line supplying current to a load and a second line supplying additional current to the load and a battery management apparatus configured to manage the battery, in which the battery management apparatus is configured to control, based on a state of the load, the current supplied to the load through the first line and the second line.

## Description

### [TECHNICAL FIELD]

### CROSS-REFERENCE TO RELATED APPLICATION

This application claims priority to and the benefit of Korean Patent Application No. 10-2022-0121947 filed in the Korean Intellectual Property Office on September 26, 2022, the entire content of which is incorporated herein by reference.

### TECHNICAL FIELD

Embodiments disclosed herein relate to a battery system, a battery management system, and a battery management method.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

To drive electric propulsion systems (e.g., airplanes, vehicles, ships, etc.), in a system including a motor, an inverter, a converter, and a battery, batteries may be connected in parallel to prevent a loss of propulsion and control in emergency situations. When the batteries are connected in parallel, in the event of a problem in one or some of the batteries, the battery having the problem is removed from a power path to secure power stability of the entire system. However, in case of load imbalance (e.g., turning of an airplane, etc.), the batteries connected in parallel may have difficulties in taking as much power as desired due to current concentration in the loaded power path.

### [DISCLOSURE]

### [TECHNICAL PROBLEM]

Embodiments disclosed herein aim to provide a battery system, a battery management system, and a battery management method in which in case of load imbalance, as much power as desired may be output through additional current supply.

Embodiments disclosed herein aim to provide a battery system, a battery management system, and a battery management method in which in case of load imbalance, current may be additionally supplied by increasing a parallel path of a corresponding path.

Technical problems of the embodiments disclosed herein are not limited to the above-described technical problems, and other unmentioned technical problems would be clearly understood by one of ordinary skill in the art from the following description.

### [TECHNICAL SOLUTION]

A battery system according to an embodiment disclosed herein includes a battery connected through a first line supplying current to a load and a second line supplying additional current to the load and a battery management apparatus configured to manage the battery, in which the battery management apparatus is configured to control, based on a state of the load, the current supplied to the load through the first line and the second line.

In an embodiment, the battery management apparatus may be further configured to supply the current to the load through the first line when the load is used.

In an embodiment, the battery management apparatus may be further configured to additionally supply the current through the second line while supplying the current through the first line, when imbalance occurs in the load.

In an embodiment, the first line may include a first switch, the second line may include a second switch and a third switch, and the battery management apparatus may be further configured to control a maximum value of a magnitude of the current supplied to the load by controlling the first switch, the second switch, and the third switch.

In an embodiment, the battery management apparatus may be further configured to short-circuit the first switch and open the second switch and the third switch, when the load is used.

In an embodiment, the battery management apparatus may be further configured to short-circuit the first switch, the second switch, and the third switch, when the imbalance occurs in the load.

In an embodiment, a cut-off control element may be arranged on the second line, and the first line and the second line may be designed to be dualized.

A battery management system according to an embodiment disclosed herein includes a plurality of batteries connected in parallel through a plurality of first lines supplying current to a plurality of loads and a plurality of second lines supplying additional current to the plurality of loads and a plurality of battery management apparatuses configured to manage each of the plurality of batteries, in which a first battery management apparatus among the plurality of battery management apparatuses is configured to control, based on a state of a first load corresponding to the first battery management apparatus, current supplied to the first load through a first line corresponding to the first battery management apparatus and a second line corresponding to the first battery management apparatus.

In an embodiment, the first battery management apparatus may be further configured to supply the current through the first line corresponding to the first battery management apparatus, when the state of the first load is normal.

In an embodiment, the first battery management apparatus may be further configured to additionally supply the current through the second line corresponding to the first battery management apparatus while supplying the current through the first line corresponding to the first battery management apparatus, when imbalance occurs in the first load.

In an embodiment, the plurality of first lines may include a plurality of first switches, and the plurality of second lines may include a plurality of second switches and a plurality of third switches, and the first battery management apparatus may be further configured to control a maximum value of a magnitude of the current supplied to the first load by controlling a first switch corresponding to the first battery management apparatus, a second switch corresponding to the first battery management apparatus, and a third switch corresponding to the first battery management apparatus.

In an embodiment, the first battery management apparatus may be further configured to, when the load is used, short-circuit the first switch corresponding to the first battery management apparatus and open the second switch corresponding to the first battery management apparatus and the third switch corresponding to the first battery management apparatus.

In an embodiment, the first battery management apparatus may be further configured to, when imbalance occurs in the first load, short-circuit the first switch corresponding to the first battery management apparatus, the second switch corresponding to the first battery management apparatus, and the third switch corresponding to the first battery management apparatus.

In an embodiment, the plurality of battery management apparatuses may be further configured to, when imbalance occurs in at least one of the plurality of loads, short-circuit the plurality of second switches and short-circuit the third switch corresponding to a load where the imbalance occurs.

In an embodiment, the battery management system may further include a plurality of current sensors configured to measure current flowing through a plurality of loads, in which the plurality of battery management apparatuses are further configured to determine imbalance of the plurality of loads, based on current measured by the plurality of current sensors.

In an embodiment, a cut-off control element may be arranged on the plurality of second lines.

A battery management method according to an embodiment disclosed herein includes identifying a state of a first load corresponding to a first battery management apparatus and controlling current supplied to the first load through a first line corresponding to the first battery management apparatus and a second line corresponding to the first battery management apparatus, in which the first battery management apparatus is one of a plurality of battery management apparatuses respectively managing a plurality of batteries, and the plurality of batteries are connected in parallel through a plurality of first lines supplying current to a plurality of loads and a plurality of second lines supplying additional current to the plurality of loads.

In an embodiment, the controlling of the current supplied to the first load through the first line corresponding to the first battery management apparatus and the second line corresponding to the first battery management apparatus may include supplying the current through the first line corresponding to the first battery management apparatus, when the state of the first load is normal.

In an embodiment, the controlling of the current supplied to the first load through the first line corresponding to the first battery management apparatus and the second line corresponding to the first battery management apparatus may include additionally supplying the current through the second line corresponding to the first battery management apparatus, when imbalance occurs in the first load.

In an embodiment, the controlling of the current supplied to the first load through the first line corresponding to the first battery management apparatus and the second line corresponding to the first battery management apparatus may include controlling a maximum value of a magnitude of the current supplied to the first load by controlling a first switch corresponding to the first battery management apparatus, a second switch corresponding to the first battery management apparatus, and a third switch corresponding to the first battery management apparatus, and the plurality of first lines may include a plurality of first switches, and the plurality of second lines may include a plurality of second switches and a plurality of third switches.

### [ADVANTAGEOUS EFFECTS]

With a battery system, a battery management system, and a battery management method according to an embodiment disclosed herein, in case of load imbalance in an electric propulsion system, additional current may be supplied by increasing a parallel path connected to a path in which the imbalance occurs.

With the battery system, the battery system, the battery management system, and the battery management method according to an embodiment disclosed herein, an output line of a battery may be dualized to expand a power maximum value based on a current allowance of a parallel path connected by default, thereby quickly addressing an acceleration and driving load imbalance of a propulsion system.

With the battery system, the battery system, the battery management system, and the battery management method according to an embodiment disclosed herein, the lifetime of electronic products may be extended by lowering a rated current of high voltage electrical devices.

Moreover, various effects recognized directly or indirectly from the disclosure may be provided.

### [DESCRIPTION OF DRAWINGS]

FIG. 1 is a view showing a battery system according to an embodiment disclosed herein.
FIG. 2 is a block diagram of a battery management system according to an embodiment disclosed herein.
FIG. 3 is a diagram showing in detail a battery management system according to an embodiment disclosed herein.
FIG. 4 shows an example of a load connected to a battery management system according to an embodiment disclosed herein.
FIG. 5 is a flowchart showing a battery management method according to an embodiment disclosed herein.
FIG. 6 is a flowchart illustrating in detail a battery management method according to an embodiment disclosed herein.
FIG. 7 is a block diagram showing a hardware configuration of a computing system for performing a battery management method, according to an embodiment disclosed herein.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

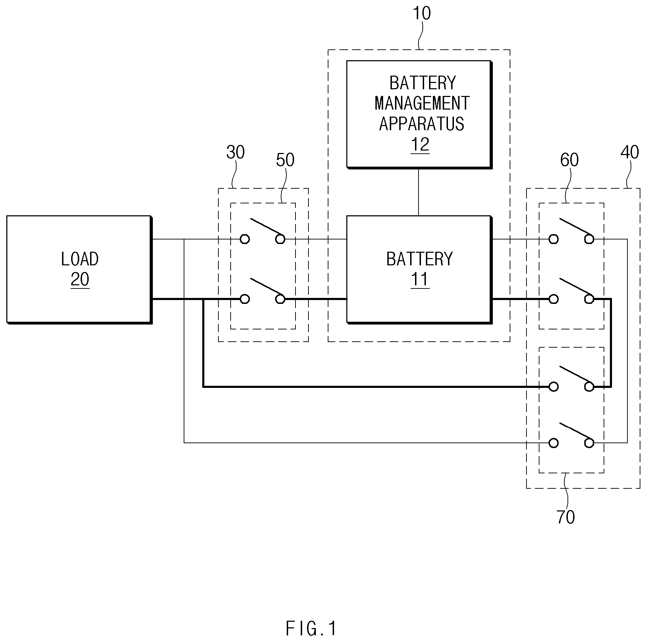

FIG. 1 is a view showing a battery system according to an embodiment disclosed herein.

Referring to FIG. 1, a battery system 10 according to an embodiment disclosed herein may include a battery 11 and a battery management apparatus 12.

The battery 11 may supply current to a load 20. For example, the battery 11 may supply current to the load 20 through a first line 30, and supply additional current to the load 20 through a second line 40.

The battery management apparatus 12 may manage the battery 11. For example, the battery management apparatus 12 may control the current supplied to the load 20 through the first line 30 and the second line 40, based on a state of the load 20. According to an embodiment, the battery management apparatus 12 may control a maximum value of a magnitude of the current supplied to the load 20 through the first line 30 and the second line 40, based on the state of the load 20.

The battery management apparatus 12 may supply the current supplied to the load 20 through the first line 30 when the load 20 is used. For example, when a sufficient amount of current is supplied to the load 20 through the first line 30, the battery management apparatus 12 may not supply the current to the load 20 through the second line 40.

In case of imbalance in the load 20, the battery management apparatus 12 may additionally supply the current through the second line 40 while supplying the current through the first line 30.

According to an embodiment, the first line 30 may include a first switch 50. The second line 40 may include a second switch 60 and a third switch 70.

The battery management apparatus 12 may control the first switch 50, the second switch 60, and the third switch 70 to control a maximum value of a magnitude of the current supplied to the load 20. For example, when the load 20 is used, the battery management apparatus 12 may short-circuit the first switch 50 and open the second switch 60 and the third switch 70. In another example, when imbalance occurs in the load 20, the battery management apparatus 12 may short-circuit all of the first switch 50, the second switch 60, and the third switch 70 to supply current to the load 20 through the first line 30 and the second line 40.

According to an embodiment, a cut-off control element may be arranged on the second line 40. In this case, the first line 30 and the second line 40 may be designed to be dualized.

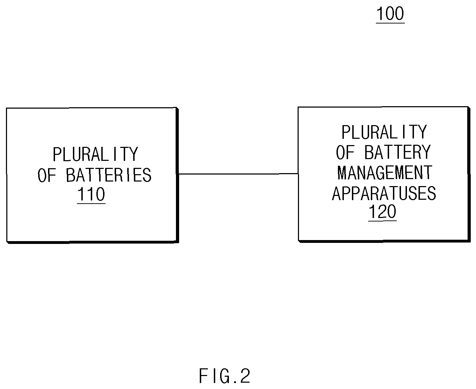

FIG. 2 is a block diagram of a battery management system according to an embodiment disclosed herein.

Referring to FIG. 2, a battery system 100 according to an embodiment disclosed herein may include a plurality of batteries 110 and a plurality of battery management apparatuses 120.

The plurality of batteries 110 may provide power to the load. For example, the plurality of batteries 110 may supply current to a plurality of loads. In another example, the plurality of batteries 1100 may supply, to the plurality of loads, current through a first line and additional current through a second line.

According to an embodiment, the plurality of batteries 110 may be connected in parallel with each other.

The plurality of battery management apparatuses 120 may respectively manage the plurality of batteries 110. For example, the plurality of battery management apparatuses 120 may respectively monitor a voltage, a current, a temperature, etc., of the plurality of batteries 110 to perform control and management to prevent overcharge and overdischarge, etc. In another embodiment, each of the plurality of battery management apparatuses 120, which is an interface for receiving measurement values of foregoing various parameters of the plurality of batteries 110, may include a plurality of terminals and a circuit, etc., connected to the terminals to process received values. The plurality of battery management apparatuses 120 may control ON/OFF of a switch (e.g., a relay or a contactor), etc., and may be connected to the plurality of batteries 110 to monitor the state of each of the plurality of batteries 110.

According to an embodiment, any one of the plurality of battery management apparatuses 120 may be a master battery management apparatus, and the other battery management apparatuses 120 may be slave battery management apparatuses. In this case, the master battery management apparatus may control the slave battery management apparatuses.

According to an embodiment, the plurality of battery management apparatuses 120 may control current supplied to the plurality of loads. For example, the plurality of battery management apparatuses 120 may control a maximum value of current supplied to the plurality of loads. In another example, the plurality of battery management apparatuses 120 may control which one of the first line and the second line the current is to be supplied to the plurality of loads from the plurality of batteries 110.

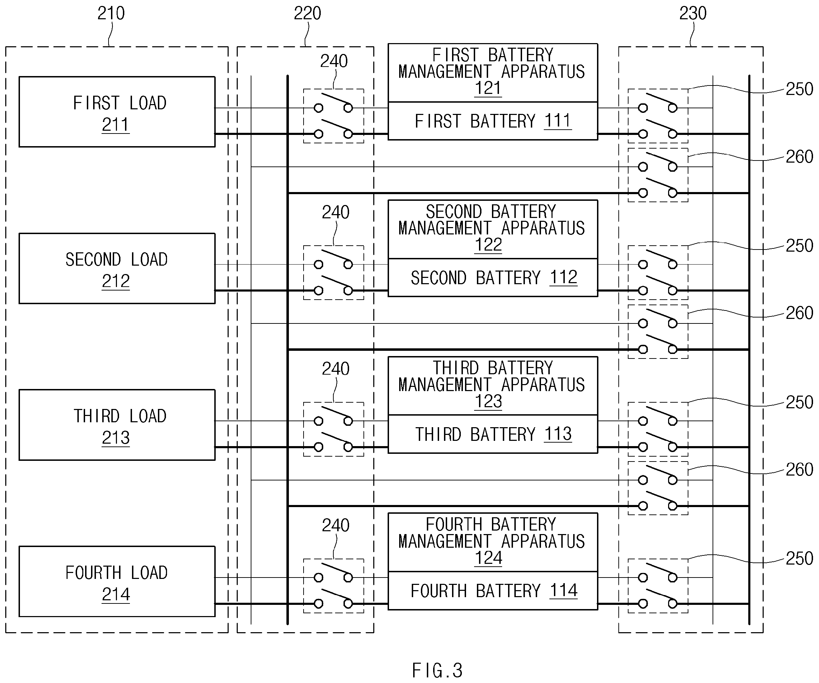

FIG. 3 is a diagram showing in detail a battery management system according to an embodiment disclosed herein.

Referring to FIG. 3, the battery management system 100 according to an embodiment disclosed herein may include a plurality of batteries 111, 112, 113, and 114 and a plurality of battery management apparatuses 121, 122, 123, and 124.

According to an embodiment, the plurality of batteries 111, 112, 113, and 114 may be included in the plurality of batteries 110 of FIG. 2, and the plurality of battery management apparatuses 121, 122, 123, and 124 may be included in the plurality of battery management apparatuses 120 of FIG. 2. While four batteries and four battery management apparatuses are shown in FIG. 3, the plurality of batteries 110 and the plurality of battery management apparatuses 120 may respectively include n batteries and n battery management apparatuses (n is a natural number of 2 or greater).

According to an embodiment, the plurality of battery management apparatuses 120 may respectively manage the plurality of batteries 110. For example, the first battery management apparatus 121 may manage the first battery 111, the second battery management apparatus 122 may manage the second battery 112, the third battery management apparatus 123 may manage the third battery 113, and the fourth battery management apparatus 124 may manage the fourth battery 114.

The plurality of loads 210 may include a plurality of loads. For example, the plurality of loads 210 may include a first load 211, a second load 212, a third load 213, and a fourth load 214.

The plurality of batteries 111, 112, 113, and 114 may be connected to the plurality of loads 210. For example, the plurality of batteries 110 may be connected in parallel with the plurality of loads 210. In another example, the plurality of batteries 110 may supply current to the plurality of loads 210 through a plurality of first lines 220, and supply additional current to the plurality of loads 210 through a plurality of second lines 230. According to an embodiment, the plurality of batteries 110 may be connected in parallel through the plurality of first lines 220 and the plurality of second lines 230.

According to an embodiment, a cut-off control element may be arranged on the plurality of second lines. In another example, a cut-off control element may be arranged on the plurality of first lines. That is, the battery management system 100 may design output terminals of the plurality of batteries 110 to be dualized and thus transmit outputs of the plurality of batteries 110 to the plurality of loads 210 through the first line and the second line.

The plurality of first lines 220 may include a plurality of first switches 240. For example, the plurality of batteries 110 and the plurality of loads 210 may be connected to the plurality of first lines 220 through the plurality of first switches 240. According to an embodiment, the plurality of first switches 240 may be respectively controlled by the plurality of battery management apparatuses 120. For example, the first battery management apparatus 121 may control a first switch connected to the first battery 111.

The plurality of second lines 230 may include a plurality of second switches 250 and a plurality of third switches 260. For example, the plurality of batteries 110 and the plurality of loads 210 may be connected to the plurality of second lines 230 through the plurality of third switches 260. According to an embodiment, the plurality of second switches 250 and the plurality of third switches 260 may be respectively controlled by the plurality of battery management apparatuses 120. For example, the first battery management apparatus 121 may control a second switch and a third switch connected to the first battery 111.

The first battery management apparatus 121 among the plurality of battery management apparatuses 120 may identify a state of the first load 211 corresponding to the first battery management apparatus 121. The first battery management apparatus 121 may control a maximum value of a magnitude of the current supplied to the first load 211 through the first line corresponding to the first battery management apparatus 121 and the second line corresponding to the first battery management apparatus 121, based on the state of the first load 211.

According to an embodiment, each of the plurality of battery management apparatuses 120 may control a maximum value of a magnitude of current supplied to a load through a first line and a second line corresponding to each battery management apparatus, based on a state of the load. That is, not only the first battery management apparatus 121, but also other battery management apparatuses may control a maximum value of a magnitude of current supplied to a load. Herein, for convenience of description, an example will be described where the first battery management apparatus 121 controls a maximum value of a magnitude of current supplied to the first load 211 based on the state of the first load 211.

When the state of the first load 211 is normal, the first battery management apparatus 121 may supply current through the first line corresponding to the first battery management apparatus 121. For example, the first battery management apparatus 121 may supply current to the first load 211 through the first line when the first load 211 is used.

According to an embodiment, voltage supplied to the plurality of loads 210 from the plurality of batteries 110 may be a three-phase voltage, and when a load is concentrated on the plurality of loads 210 (e.g., in case of an increasing rotating speed of a motor, forward movement, direction change, etc.), a switching speed of a voltage needs to be increased, and more current may need to be supplied when a switching speed increases. As the amount of current flowable through each line connected to the load is limited, more lines need to be connected to the load so as to be supplied with more current. That is, when over-current is instantly required for the load, a required amount of current may not be supplied if only one line is connected, making the battery to supply more current to the load through more lines.

When imbalance occurs in the first load 211, the first battery management apparatus 121 may additionally supply current through the second line corresponding to the first battery management apparatus 121 while supplying current through the first line corresponding to the first battery management apparatus 121. For example, when the first load 211 is used, the first battery management apparatus 121 may control the first switch corresponding to the first battery management apparatus 121 to be short-circuited to supply current to the first load 211 through the first line. When it is determined that imbalance occurs in the first load 211, the first battery management apparatus 121 may control the second switch and the third switch corresponding to the first battery management apparatus 121 to be short-circuited to additionally supply current to the first load 211 through the second line.

That is, the first battery management apparatus 121 may control the first switch corresponding to the first battery management apparatus 121, the second switch corresponding to the first battery management apparatus 121, and the third switch corresponding to the first battery management apparatus 121 to control a maximum value of a magnitude of current supplied to the first load 211. For example, when the load is used, the first battery management apparatus 121 may short-circuit the first switch corresponding to the first battery management apparatus 121 and open the second switch and the third switch corresponding to the first battery management apparatus 121. When imbalance occurs in the first load 211, the first battery management apparatus 121 may short-circuit the first switch, the second switch, and the third switch corresponding to the first battery management apparatus 121.

According to an embodiment, when the plurality of battery management apparatuses 120 have to use the plurality of loads 210, the plurality of battery management apparatuses 120 may short-circuit the plurality of first switches 240 to supply current through the plurality of first lines 220.

According to an embodiment, when imbalance occurs in at least one of the plurality of loads 210, the plurality of battery management apparatuses 120 may short-circuit the plurality of second switches 250 and short-circuit the third switch corresponding to the load where the imbalance occurs. That is, as the third switch corresponding to a load without imbalance is open, the load where the imbalance occurs may be supplied with more current than the load without imbalance, such that the imbalance occurring in the load may be controlled.

According to an embodiment, any one of the plurality of battery management apparatuses 120 (e.g., the first battery management apparatus 121) may control, as a master battery management apparatus, the other battery management apparatuses. For example, the master battery management apparatus may identify a state of every load to identify a load where imbalance occurs, and transmit a control signal for supplying current through the second line to a battery management apparatus corresponding to the load where the imbalance occurs.

In case of load imbalance in an electric propulsion system, the battery management system 100 according to an embodiment disclosed herein may supply additional current by increasing a parallel path connected to a path in which the imbalance occurs.

The battery management system 100 according to an embodiment disclosed herein may dualize an output line of a battery to expand a power maximum value based on a current allowance of a parallel path connected by default, thereby quickly addressing an acceleration and driving load imbalance of a propulsion system.

The battery management system 100 according to an embodiment disclosed herein may extend the lifetime of electronic products by lowering a rated current of high voltage electrical devices.

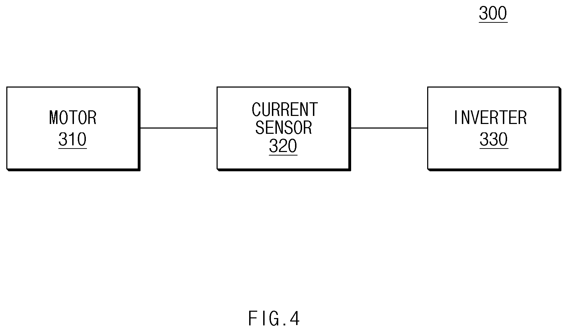

FIG. 4 shows an example of a load connected to a battery management system according to an embodiment disclosed herein.

A load 300 connected to the battery management system 100 according to an embodiment disclosed herein may include a motor 310, a current sensor 320, and an inverter 330. According to an embodiment, the load 300 may further include a converter (not shown). According to an embodiment, the motor 310 is not limited to a motor, and the motor 310 may all include any type of devices capable of controlling mobility of a device having the battery management system 100 mounted thereon by being supplied with current. According to an embodiment, the plurality of loads 210 shown in FIG. 3 may include the load 300.

The current sensor 320 may measure a magnitude of current supplied to the motor 310. For example, the current sensor 320 may transmit the measured magnitude of the current to a battery management apparatus corresponding to the load 300. In this case, the battery management apparatus corresponding to the load 300 may determine based on the measured current whether imbalance occurs in the load.

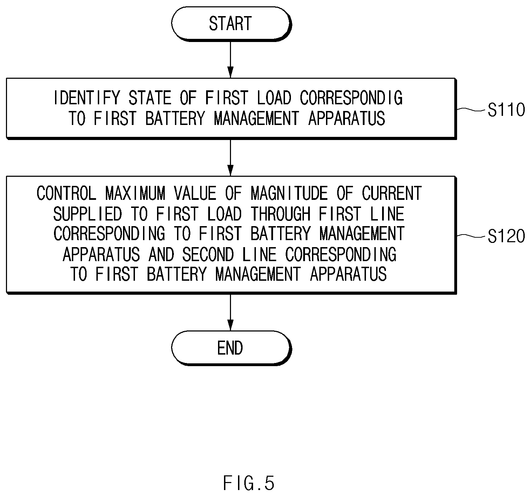

FIG. 5 is a flowchart showing a battery management method according to an embodiment disclosed herein.

According to an embodiment, operations shown in FIG. 5 may be performed by any one of the plurality of battery management apparatuses 120 (e.g., the first battery management apparatus 121).

Referring to FIG. 5, a battery management method disclosed herein may include operation S110 of identifying a state of a first load corresponding to a first battery management apparatus and operation S120 of controlling current supplied to the first load through a first line corresponding to the first battery management apparatus and a second line corresponding to the first battery management apparatus.

According to an embodiment, the first battery management apparatus 121 may be one of the plurality of battery management apparatuses 120 respectively managing the plurality of batteries 110, and the plurality of batteries 110 may be connected in parallel through the plurality of first lines 220 supplying current to the plurality of loads 210 and the plurality of second lines 230 supplying additional current to the plurality of loads 210.

In operation S110, the first battery management apparatus 121 may identify the state of the first load 211 corresponding to the first battery management apparatus 121. For example, the first battery management apparatus 121 may identify based on current flowing through the first load 211 whether imbalance occurs in the first load 211.

In operation S120, the first battery management apparatus 121 may control a maximum value of a magnitude of the current supplied to the first load 211 through the first line corresponding to the first battery management apparatus 121 and the second line corresponding to the first battery management apparatus 121. For example, the first battery management apparatus 121 may control the first switch corresponding to the first battery management apparatus 121, the second switch corresponding to the first battery management apparatus 121, and the third switch corresponding to the first battery management apparatus 121 to control the maximum value of the magnitude of current supplied to the first load 211. According to an embodiment, the plurality of first lines may include the plurality of first switches, and the plurality of second lines may include the second switch and the third switch.

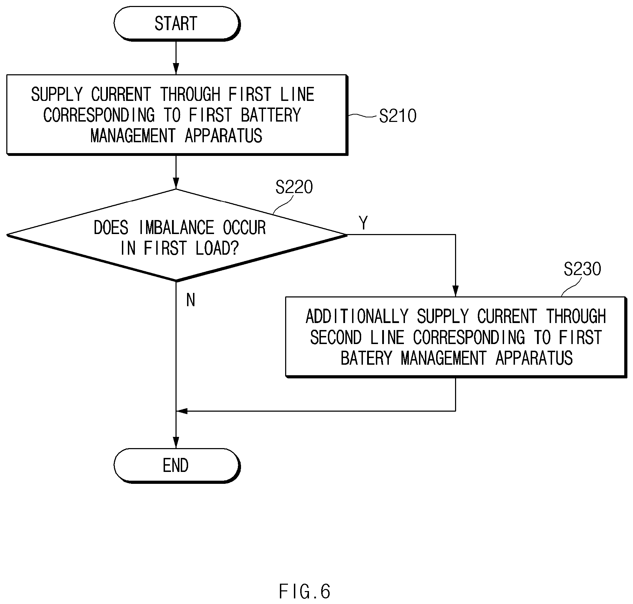

FIG. 6 is a flowchart illustrating in detail a battery management method according to an embodiment disclosed herein.

According to an embodiment, operations shown in FIG. 6 may be performed by any one of the plurality of battery management apparatuses 120 of FIG. 3 (e.g., the first battery management apparatus 121).

Referring to FIG. 6, a battery management method disclosed herein may include operation S210 of supplying current through a first line corresponding to a first battery management apparatus, operation S220 of identifying whether imbalance occurs in a first load, and operation S230 of additionally supplying current through a second line corresponding to the first battery management apparatus when imbalance occurs in the first load.

In operation S210, when the first load 211 is used, the first battery management apparatus 121 may supply the current through the first line corresponding to the first battery management apparatus 121.

In operation S220, the first battery management apparatus 121 may identify whether the imbalance occurs in the first load 211. For example, the first battery management apparatus 121 may identify based on current flowing through the first load 211 whether over-current has to be input to the first load 211.

In operation S230, when the imbalance occurs in the first load 211, the first battery management apparatus 121 may supply additional current through the second line corresponding to the first battery management apparatus 121.

According to an embodiment, when the imbalance does not occur in the first load 211, the first battery management apparatus 121 may supply the current to the first load 211 only through the first line.

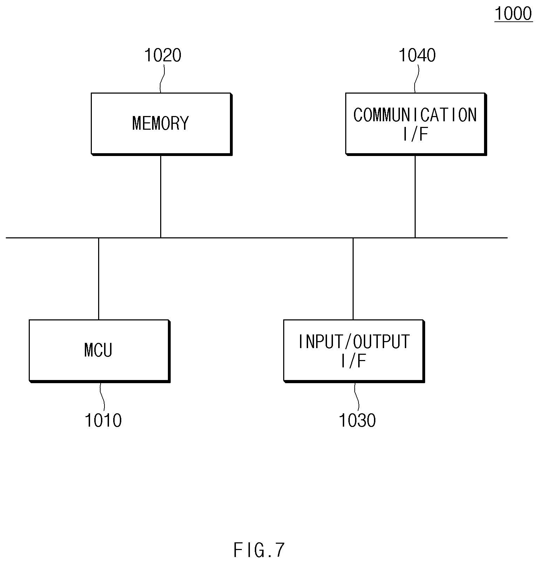

FIG. 7 is a block diagram showing a hardware configuration of a computing system for performing a battery management method, according to an embodiment disclosed herein.

Referring to FIG. 7, a computing system 1000 according to an embodiment disclosed herein may include an MCU 1010, a memory 1020, an input/output I/F 1030, and a communication I/F 1040.

The MCU 1010 may be a processor that executes various programs (e.g., a load current measurement program, a battery voltage collection program, a load imbalance determination program, a relay control program, etc.) stored in the memory 1020, processes various information including current supplied to a load, whether or not load imbalance occurs, whether or not additional current is supplied, etc., through these programs, and executes the above-described functions of the battery management apparatus included in the battery management system shown in FIG. 3.

The memory 1020 may store various programs such as a load current measurement program, a battery voltage collection program, a load imbalance determination program, a relay control program, etc. The memory 1020 may store various information such as current supplied to a load, whether or not load imbalance occurs, whether or not additional current is supplied, etc.

The memory 1020 may be provided in plural, depending on a need. The memory 1020 may be volatile memory or non-volatile memory. For the memory 1020 as the volatile memory, random access memory (RAM), dynamic RAM (DRAM), static RAM (SRAM), etc., may be used. For the memory 1020 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 1020 are merely examples and are not limited thereto.

The input/output I/F 1030 may provide an interface for transmitting and receiving data by connecting an input device (not shown) such as a keyboard, a mouse, a touch panel, etc., and an output device such as a display (not shown), etc., to the MCU 1010.

The communication I/F 1040, which is a component capable of transmitting and receiving various data to and from a server, may be various devices capable of supporting wired or wireless communication. For example, the battery management apparatus may transmit and receive information such as current supplied to a load, whether or not load imbalance occurs, whether or not additional current is supplied, etc., to and from an external server separately provided through the communication I/F 1040.

As such, a computer program according to an embodiment disclosed herein may be recorded in the memory 1020 and processed by the MCU 1010, thus being implemented as a module that performs functions of the battery management apparatus shown in FIG. 3.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present disclosure.

## Claims

1. A battery system comprising:
a battery connected through a first line supplying current to a load and a second line supplying additional current to the load; and
a battery management apparatus configured to manage the battery,
wherein the battery management apparatus is configured to control, based on a state of the load, the current supplied to the load through the first line and the second line.

2. The battery system of claim 1, wherein the battery management apparatus is further configured to supply the current to the load through the first line when the load is used.

3. The battery system of claim 1, wherein the battery management apparatus is further configured to additionally supply the current through the second line while supplying the current through the first line, when imbalance occurs in the load.

4. The battery system of claim 1, wherein the first line comprises a first switch,
the second line comprises a second switch and a third switch, and
the battery management apparatus is further configured to control a maximum value of a magnitude of the current supplied to the load by controlling the first switch, the second switch, and the third switch.

5. The battery system of claim 4, wherein the battery management apparatus is further configured to short-circuit the first switch and open the second switch and the third switch, when the load is used.

6. The battery system of claim 4, wherein the battery management apparatus is further configured to short-circuit the first switch, the second switch, and the third switch, when the imbalance occurs in the load.

7. The battery system of claim 1, wherein a cut-off control element is arranged on the second line, and the first line and the second line are designed to be dualized.

8. A battery management system comprising:
a plurality of batteries connected in parallel through a plurality of first lines supplying current to a plurality of loads and a plurality of second lines supplying additional current to the plurality of loads; and
a plurality of battery management apparatuses configured to manage each of the plurality of batteries,
wherein a first battery management apparatus among the plurality of battery management apparatuses is configured to control, based on a state of a first load corresponding to the first battery management apparatus, current supplied to the first load through a first line corresponding to the first battery management apparatus and a second line corresponding to the first battery management apparatus.

9. The battery management system of claim 8, wherein the first battery management apparatus is further configured to supply the current through the first line corresponding to the first battery management apparatus, when the state of the first load is normal.

10. The battery management system of claim 8, wherein the first battery management apparatus is further configured to additionally supply the current through the second line corresponding to the first battery management apparatus while supplying the current through the first line corresponding to the first battery management apparatus, when imbalance occurs in the first load.

11. The battery management system of claim 8, wherein the plurality of first lines comprise a plurality of first switches, and
the plurality of second lines comprise a plurality of second switches and a plurality of third switches, and
the first battery management apparatus is further configured to control a maximum value of a magnitude of the current supplied to the first load by controlling a first switch corresponding to the first battery management apparatus, a second switch corresponding to the first battery management apparatus, and a third switch corresponding to the first battery management apparatus.

12. The battery management system of claim 11, wherein the first battery management apparatus is further configured to, when the load is used:
short-circuit the first switch corresponding to the first battery management apparatus; and
open the second switch corresponding to the first battery management apparatus and the third switch corresponding to the first battery management apparatus.

13. The battery management system of claim 11, wherein the first battery management apparatus is further configured to, when imbalance occurs in the first load, short-circuit the first switch corresponding to the first battery management apparatus, the second switch corresponding to the first battery management apparatus, and the third switch corresponding to the first battery management apparatus.

14. The battery management system of claim 11, wherein the plurality of battery management apparatuses is further configured to, when imbalance occurs in at least one of the plurality of loads:
short-circuit the plurality of second switches; and
short-circuit the third switch corresponding to a load where the imbalance occurs.

15. The battery management system of claim 8, further comprising a plurality of current sensors configured to measure current flowing through a plurality of loads,
wherein the plurality of battery management apparatuses are further configured to determine imbalance of the plurality of loads, based on current measured by the plurality of current sensors.

16. The battery management system of claim 8, wherein a cut-off control element is arranged on the plurality of second lines.

17. A battery management method comprising:
identifying a state of a first load corresponding to a first battery management apparatus; and
controlling current supplied to the first load through a first line corresponding to the first battery management apparatus and a second line corresponding to the first battery management apparatus,
wherein the first battery management apparatus is one of a plurality of battery management apparatuses respectively managing a plurality of batteries, and
the plurality of batteries are connected in parallel through a plurality of first lines supplying current to a plurality of loads and a plurality of second lines supplying additional current to the plurality of loads.

18. The battery management method of claim 17, wherein the controlling of the current supplied to the first load through the first line corresponding to the first battery management apparatus and the second line corresponding to the first battery management apparatus comprises supplying the current through the first line corresponding to the first battery management apparatus, when the state of the first load is normal.

19. The battery management method of claim 17, wherein the controlling of the current supplied to the first load through the first line corresponding to the first battery management apparatus and the second line corresponding to the first battery management apparatus comprises additionally supplying the current through the second line corresponding to the first battery management apparatus, when imbalance occurs in the first load.

20. The battery management method of claim 17, wherein the controlling of the current supplied to the first load through the first line corresponding to the first battery management apparatus and the second line corresponding to the first battery management apparatus comprises controlling a maximum value of a magnitude of the current supplied to the first load by controlling a first switch corresponding to the first battery management apparatus, a second switch corresponding to the first battery management apparatus, and a third switch corresponding to the first battery management apparatus, and
the plurality of first lines comprise a plurality of first switches, and
the plurality of second lines comprise a plurality of second switches and a plurality of third switches.
